Europäisches Patentamt

European Patent Office

Office européen des brevets

(11) Veröffentlichungsnummer: **0 348 671 B1**

(12) **EUROPÄISCHE PATENTSCHRIFT**

(45) Veröffentlichungstag der Patentschrift: **28.10.92**

(21) Anmeldenummer: **89109516.8**

(22) Anmeldetag: **26.05.89**

(51) Int. Cl.⁵: **G08B 5/00**

(54) **Verkehrsspiegel.**

(30) Priorität: **30.06.88 DE 3821997**
**14.02.89 DE 8901679 U**

(43) Veröffentlichungstag der Anmeldung:
**03.01.90 Patentblatt 90/01**

(45) Bekanntmachung des Hinweises auf die
Patenterteilung:
**28.10.92 Patentblatt 92/44**

(84) Benannte Vertragsstaaten:
**AT BE CH DE ES FR GB IT LI NL SE**

(56) Entgegenhaltungen:
**CH-A- 347 112**
**DE-U- 1 988 253**
**DE-U- 7 504 467**
**US-A- 3 200 705**
**US-A- 4 178 065**

(73) Patentinhaber: **VEGLA Vereinigte Glaswerke GmbH**
**Viktoriaallee 3-5**
**W-5100 Aachen(DE)**

(72) Erfinder: **Gillner, Manfred**
**Rollefstrasse 52 b**
**W-5100 Aachen(DE)**
Erfinder: **Nuding, Werner**

**verstorben(DE)**
Erfinder: **Wlaschitsch, Josef**
**Reichenbergerstrasse 6**
**W-7120 Bietigheim(DE)**

(74) Vertreter: **Biermann, Wilhelm, Dr.-Ing. et al**
**VEGLA Vereinigte Glaswerke GmbH Viktoriaallee 3-5**
**W-5100 Aachen(DE)**

## Beschreibung

Die Erfindung betrifft einen Verkehrsspiegel, insbesondere einen sphaerisch gewoelbten Verkehrsspiegel, mit einem Dekorrahmen und einer metallischen Haltevorrichtung.

Verkehrsspiegel dieser Art werden an unuebersichtlichen Strassenabschnitten angebracht, um solche Strassenabschnitte mit Hilfe dieses Verkehrsspiegels ueberblicken zu koennen. Um dabei das Sichtfeld zu vergroessern, sind die Spiegel in der Regel sphaerisch gewoelbt.

Die bekannten Verkehrsspiegel dieser Art sind in einem Halterrahmen eingefasst, der seinerseits mit einer geeigneten Halte- oder Aufhaengevorrichtung verbunden ist. Beispielsweise besteht der Halterahmen aus Kunststoff. In diesem Kunststoffrahmen, der einen durchgehenden Ruecken, einen im Vergleich zu dem Ruecken dickeren massiven Rahmenteil und einen sich an den massiven Rahmenteil anschliessenden, die Flaeche des Spiegels nach aussen allseitig ueberragenden Randbereich aufweist, ist das Spiegelglas befestigt (CH-PS 487 418). Die Befestigung des Spiegelglases erfolgt mit Hilfe von Halteecken, die das Spiegelglas in den Eckbereichen uebergreifen und die ihrerseits mit dem massiven Rahmenteil verschraubt sind. Auf dem das Spiegelglas ueberragenden Randbereich ist ein Dekorrahmen mit abwechselnden Farbstreifen gebildet, der erforderlich ist, um die Aufmerksamkeit der Verkehrsteilnehmer auf den Spiegel zu richten.

Ein anderer bekannter Verkehrsspiegel besteht aus einem metallischen Kastenrahmen, beispielsweise aus verzinktem Eisenblech, der auf seiner Vorderseite Einfassungsleisten zum Halten des gewoelbten Spiegelglases traegt (CH-PS 347 112).

Der Erfindung liegt die Aufgabe zugrunde, einen Verkehrsspiegel der eingangs genannten Art mit einem demgegenueber vereinfachten Aufbau zu schaffen.

Der erfindungsgemaess ausgebildete Verkehrsspiegel zeichnet sich durch folgende Merkmale aus:

a) das Spiegelglas besteht aus thermisch vorgespanntem Einscheibensicherheitsglas;

b) die metallische Reflexionsschicht ist auf der konkaven Oberflaeche des Spiegelglases angeordnet und durch wenigstens eine Kunststoffschicht gegen die atmosphaerischen Korrosionseinfluesse geschuetzt:

c) der Dekorrahmen ist unmittelbar auf der Oberflaeche des Spiegelglases in Form einer auf dieser fest haftenden Schicht angeordnet, und

d) die Halterung aus Metall umfasst wenigstens zwei Streben, die an dem einen Ende mit Mitteln zur Befestigung am Rand des Spiegelglases versehen sind, und an deren anderem Ende ueber ein Gelenk eine Rohrschelle zur Befestigung des Verkehrsspiegels an einem rohrfoermigen Pfosten angeordnet ist.

Durch die Kombination dieser Erfindungsmerkmale wird ein Verkehrsspiegel geschaffen, bei dem auf eine aufwendige Rahmenkonstruktion verzichtet ist. Sowohl der Dekorrahmen als auch die Haltevorrichtung sind unmittelbar mit dem Spiegelglas selbst verbunden. Abgesehen von der wesentlichen Vereinfachung der Konstruktion weist der Verkehrsspiegel keine ueberstehenden Rahmenteile auf und hat eine aesthetisch besonders ansprechende Form .

Zweckmaessige Ausgestaltungen und Weiterbildungen der Erfindung ergeben sich aus den Unteranspruechen und aus dernachfolgenden Beschreibung verschiedener bevorzugter Ausfuehrungsbeispiele.

Von den Zeichnungen zeigt

Fig. 1 eine erste Ausfuehrungsform des Verkehrsspiegels in einer teilweise im Schnitt dargestellten perspektivischen Zeichnung;

Fig. 2 eine Schnittdarstellung entlang der Linie II-II in Fig. 1;

Fig. 3 eine Schnittdarstellung entlang der Linie III-III in Fig. 1,

Fig. 4 eine Befestigungsvorrichtung fuer die Haltevorrichtung des in Fig. 1 dargestellten Verkehrsspiegels;

Fig. 5 eine zweite Ausfuehrungsform des Verkehrsspiegels in Form einer Gesamtansicht;

Fig. 6 einen Schnitt durch Fig. 5 gemaess der Linie VI-VI, und

Fig. 7 eine weitere Ausfuehrungsform des Verkehrsspiegels in Form einer teilweise im Schnitt dargestellten Ansicht.

Das Spiegelglas 1 des Verkehrsspiegels kann grundsaetzlich eine beliebige Umfangsgestalt und eine beliebige Groesse aufweisen. Bewaehrt hat sich eine im wesentlichen rechteckige Umfangsgestalt, wobei die Flaechenabmessungen in den beiden Dimensionen 40 bis 120 cm betragen.

Das Spiegelglas 1 besteht aus einer thermisch vorgespannten Silikatglasscheibe von 4 bis 8 mm Dicke und ist sphaerisch gewoelbt. Die Woelbung der Glasscheibe erfolgt nach bekannten Verfahren, indem eine entsprechend der gewuenschten Umfangsgestalt geschnittene plane Glasscheibe auf eine Temperatur von etwa 600 bis 650 °C erhitzt und mit Hilfe geeigneter Presswerkzeuge gebogen wird.

Der Dekorrahmen 14 ist festhaftend mit der konvexen, das heisst vorderen Oberflaeche des Spiegelglases 1 verbunden. Er besteht aus einer dauerhaften und witterungsbestaendigen Lackschicht, insbesondere aus einer Schicht eines Einbrennlackes. Besonders bewaehrt hierfuer haben sich emailartige Einbrennfarben, die bei der fuer das Biegen und Vorspannen des Spiegelglases erforderlichen Temperatur aufgeschmolzen bzw. eingebrannt werden. Fuer diesen Zweck geeignete Einbrennfarben sind im Handel erhaeltlich. Falls solche Einbrennfarben zur Anwendung kommen, was wegen der Witterungsbestaendigkeit besonders vorteilhaft ist, werden diese Farben insbesondere nach dem Siebdruckverfahren vor dem Biegevorgang auf die Glasscheibe aufgedruckt und im Zuge der fuer das Biegen und Vorspannen erforderlichen Erwaermung der Glasscheibe eingebrannt.

Im dargestellten Fall ist der Dekorrahmen 14 zweifarbig ausgefuehrt, wobei jeweils Bereiche 15 aus roter Farbe mit Bereichen 16 aus weisser Farbe abwechseln.
Selbstverstaendlich kann der Dekorrahmen auch einfarbig oder mehr als zweifarbig ausgebildet sein. Insbesondere ist es auch moeglich, Farben mit reflektierenden Eigenschaften zu verwenden, beispielsweise Farben, denen Mikrokugeln aus Glas beigemischt sind.

Die reflektierende Silberschicht 18 sitzt auf der konkaven Oberflaeche des Spiegelglases 1. Sie wird auf die gebogene Glasscheibe aufgebracht, und zwar nach einem der fuer die Spiegelherstellung bekannten nasschemischen Verfahren. Auf diese Silberschicht 18 wird, ebenfalls nach einem nasschemischen Verfahren, eine metallische Kupferschicht 19 aufgebracht. Die Kupferschicht 19 wird mit einer witterungsbestaendigen Lackschicht 20 abgedeckt. Gegebenenfalls wird auf diese Lackschicht 20 eine klebstoffbeschichtete Kunststoffolie 21 aufkaschiert.

Das Spiegelglas 1 kann auf seiner Umfangsflaeche mit einem Rahmenprofil 23 mit U-foermigem Querschnitt versehen sein. Das Rahmenprofil 23 besteht aus geeignetem Kunststoff oder aus Aluminium. Es kann lediglich durch Klemmwirkung auf dem Rand des Spiegelglases 1 haften oder mit Hilfe eines geeigneten Klebers mit dem Rand des Spiegelglases verbunden sein. Das Rahmenprofil 23 hat zum einen die Funktion eines Zierrahmens und dient zum anderen dazu, die metallische Spiegelschicht am Rand zu schuetzen.

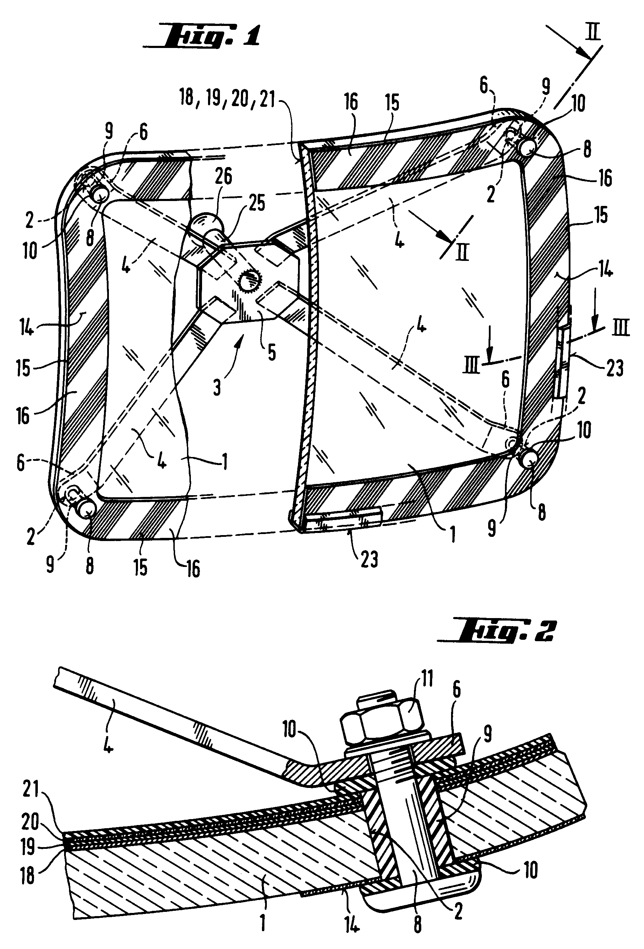

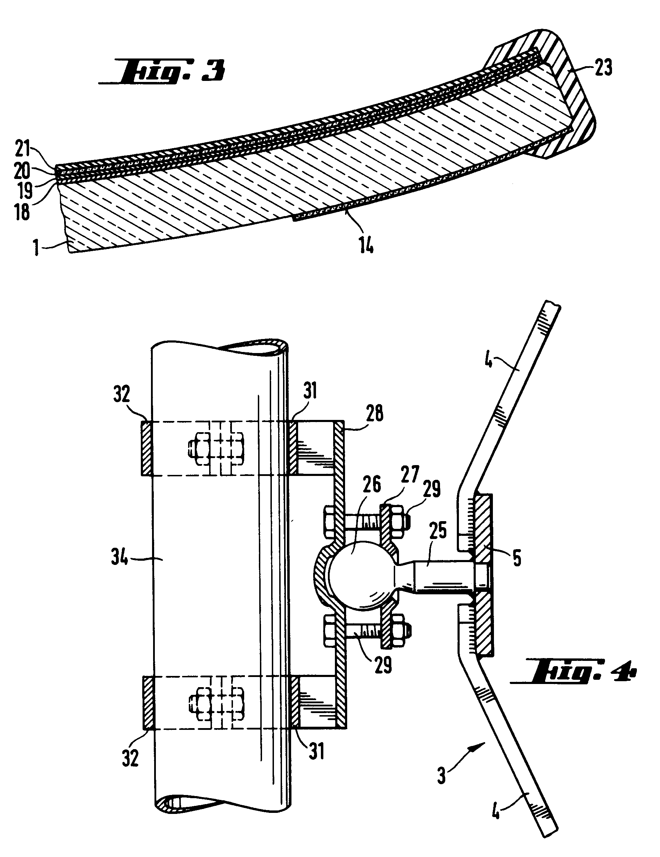

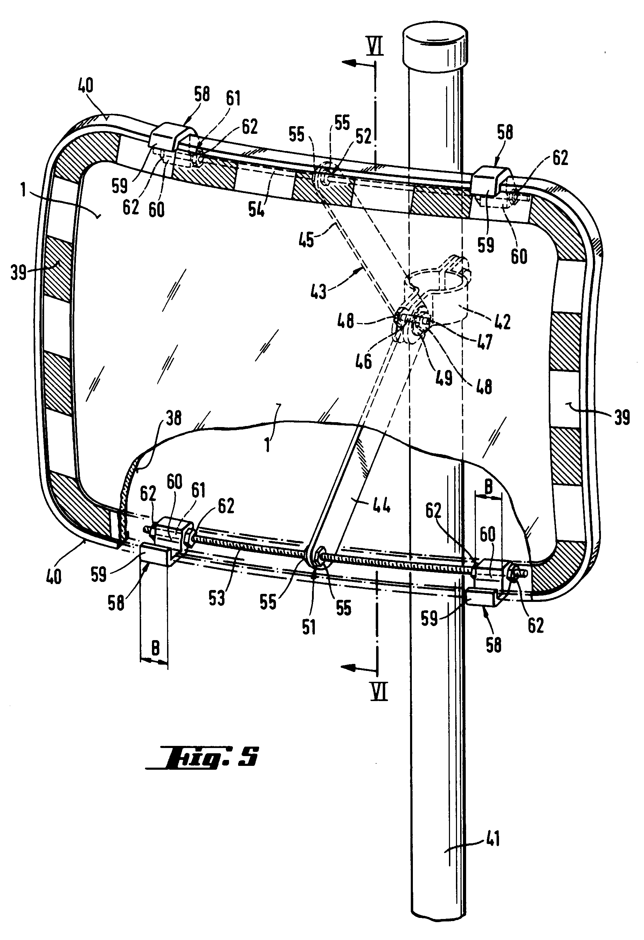

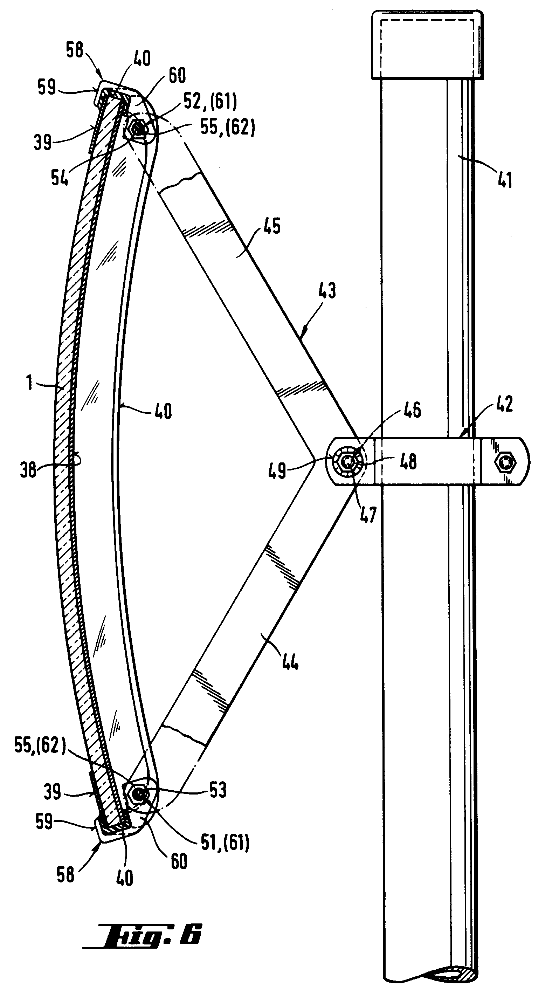

Bei der in den Fig. 1 bis 4. dargestellten Ausfuehrungsform sind die Streben 4 der Spiegelhalterung mit Hilfe von Schrauben 8 an dem Spiegelfuss 1 befestigt, das zu diesem Zweck mit Bohrungen 2 versehen ist. Die Bohrungen 2 werden in den Eckbereichen der Glasscheibe angebracht, bevor die Glasscheibe gebogen wird. Die Halterung umfasst vier Streben 4, die an einem Knotenblech 5 befestigt sind. Die Endbereiche 6 der Streben 4 sind derart abgekroepft, dass sie etwa parallel zu dem jeweiligen Flaechenbereich des Spiegelglases 1 im Bereich der Bohrung 2 verlaufen.

Die Endbereiche 6 der Streben 4 sind mit dem Spiegelglas 1 verschraubt. Fuer die Schraubverbindung dient eine Flachrundkopfschraube 8 aus einem nicht korrodierenden Metall. Um jeden Kontakt der Schraube 8 mit der Glasoberflaeche zu vermeiden, ist in der Bohrung 2 eine Huelse 9 aus einem elastischen Kunststoff angeordnet. Ferner sind zwischen dem Kopf der Schraube 8 und der Glasscheibe 1 sowie zwischen dem Endbereich 6 der Strebe 4 und der Glasscheibe 1 jeweils scheibenfoermige Zwischenlagen 10 aus elastischem Kunststoff zwischengeschaltet. Mit Hilfe der Mutter 11 wird die Strebe 4 mit der Glasscheibe 1 verschraubt. Dabei sorgen die elastischen Zwischenlagen 9, 10 dafuer, dass geringfuegige Formabweichungen ausgeglichen werden.

Die Befestigung des Verkehrsspiegels erfolgt normalerweise an einem senkrecht montierten Stahlrohr. Da die Neigung des Verkehrsspiegels von den oertlichen Gegebenheiten abhaengt und einstellbar sein muss, ist an dem Knotenblech 5 eine Befestigungsvorrichtung angeordnet, die die Einstellung der gewuenschten Neigung gestattet. Die Befestigungsvorrichtung besteht im dargestellten Fall aus einem Kugelzapfen 25, 26 und einer mit der Kugel 26 zusammenwirkenden Kugelhalterung aus zwei Platten 27, 28, die durch Schrauben 29 unter Einspannung der Kugel 26 miteinander verspannt werden. An der Platte 28 sind zwei Rohrschellenhaelften 31 befestigt, die dazu dienen, die Befestigungsvorrichtung mit Hilfe der Rohrschellenhaelften 32 auf dem Stahlrohr 34 zu befestigen.

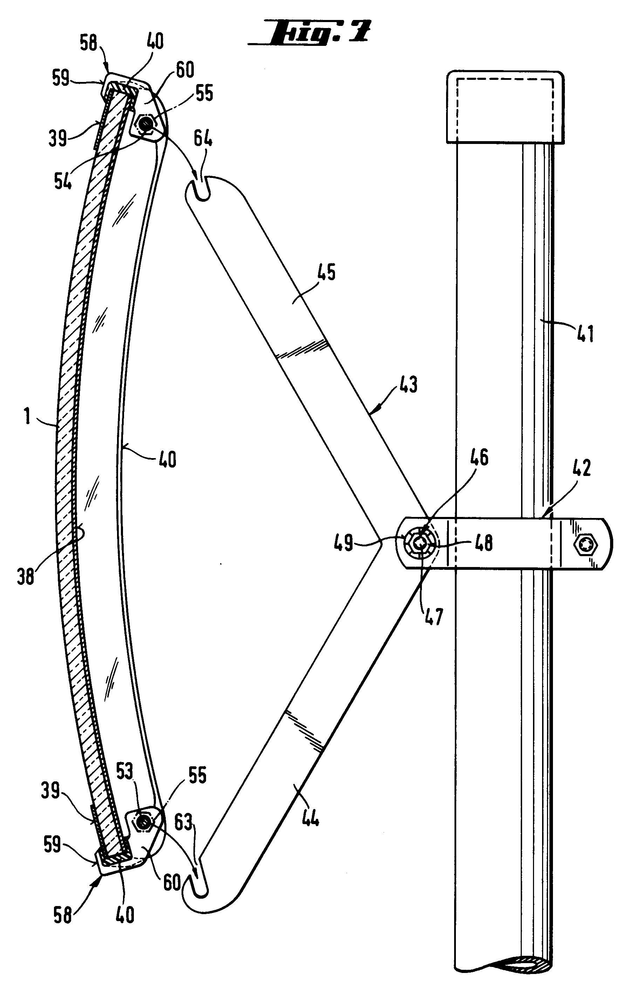

Bei den in den Fig. 5 bis 7 dargestellten Ausfuehrungsformen dient zur Befestigung des Spiegels an der Rohrschelle 42 ein winkelfoermiges Halteblech 43. Das winkelfoermige Halteblech 43 besteht aus zwei winkelfoermig angeordneten Haltestreben 44 und 45. Im Scheitelbereich der Streben 44, 45 ist eine Bohrung 46 angebracht. Mit Hilfe des Schraubenbolzens 47, der Mutter 48 und der Riffelscheibe 49 ist das Halteblech 43 in der gewuenschten Winkelstellung fest mit der Rohrschelle 42 verschraubt, mit deren Hilfe der Verkehrsspiegel an dem rohrfoermigen Pfosten 41 befestigt wird.

Die Haltestreben 44 und 45 weisen jeweils am Ende eine Bohrung 51 bzw. 52 auf. In der Bohrung 51 ist eine Gewindestange 53 angeordnet und mit Hilfe zweier Muttern 55 an der Haltestrebe 44 befestigt. Entsprechend ist in der Bohrung 52 der Haltestrebe 45 eine Gewindestange 54 mittig angeordnet und mittels zweier Muttern 55 mit der Haltestrebe 45 verschraubt.

Auf den Gewindestangen 53 und 54 sind jeweils am Ende Halteklammern 58 aus einem geeigneten Kunststoff angeordnet. Die Halteklammern 58 greifen mit ihrem vorderen Schenkel 59 ueber den Rand der Glasscheibe 1 bzw. ueber den Profilrahmen 40. Der innere Abstand zwischen dem vorderen Schenkel 59 und dem hinteren Schenkel 60 der Klammer 58, sowie das Material der Klammer 58 sind so gewaehlt, dass die Klammer 58 unter einer gewissen elastischen Verformung fest auf dem Rand der Glasscheibe sitzt. Der hintere Schenkel 60 ist mit einer Bohrung 61 versehen, mit der die Halteklammer 58 ueber die Haltestange geschoben wird. Auf der Haltestange sind die Klammern 58 jeweils mit Hilfe von zwei Muttern 62 befestigt.

Bei den Stangen 53, 54 kann es sich gemaess einer anderen Ausfuehrungsform auch um Rundstaebe handeln, die nur auf ihren Endabschnitten mit einem Gewinde versehen sind. Die Rundstaebe koennen beispielsweise mit den Haltearmen 44, 45 verschweisst sein. Die Befestigung der Klammern 58 laesst sich in diesem Fall jeweils mit einer einzigen Mutter erreichen, sofern eine geeignete Anlageflaeche fuer die Klammer 58 auf der der Mutter gegenueberliegenden Seite auf andere Weise ausgefuehrt ist.

Die Halteklammern 58 haben eine Breite B von etwa 2 bis 4 Zentimetern. Da die Haltestangen aus elastisch biegbaren geraden Gewindestangen bestehen, und das Spiegelglas 1 eine sphaerische Biegung aufweist, ergibt sich unter diesen Bedingungen eine Verspannung der Halteklammern 58 durch das Biegemoment, das durch die elastische Verbiegung der Haltestangen hervorgerufen wird. Diese Verspannung sorgt fuer eine gute und dauerhafte Befestigung der Haltevorrichtung auf der Glasscheibe.

Die in Fig. 7 dargestellte Ausfuehrungsform der Haltevorrichtung weist grundsaetzlich den gleichen Aufbau auf wie die in den Fig. 5 und 6 dargestellte und voraufgehend beschriebene Ausfuehrungsform, und bei den uebereistimmenden Teilen sind infolgedessen die entsprechenden Bezugszeichen beibehalten worden. Im Gegensatz zu der bisher beschriebenen Ausfuehrungsform weisen die Haltearme 44, 45 an ihren Enden jedoch keine Bohrungen auf, sondern sind mit schlitzfoermigen Aussparungen 63 bzw. 64 versehen. Diese schlitzfoermigen Aussparungen 63, 64 sind in der gleichen Richtung, beispielsweise nach oben, ausgerichtet und oben offen. Auf diese Weise ergibt sich eine einfache Montagemoeglichkeit des Verkehrsspiegels. Zunaechst werden die beiden Gewindestangen 53, 54 mit den Klammern 58 auf der Spiegelglasscheibe 1 befestigt. Unabhaengig davon wird das winkelfoermige Halteblech 43 mit Hilfe der Rohrschelle 42 auf dem Pfosten 41 befestigt. Nach Befestigung des Halteblechs 43 wird das Spiegelglas 1 mit den daran befestigten Haltestangen 53, 54 in der Weise an dem Halteblech 43 befestigt, dass die Haltestangen 53, 54 von oben in den jeweils zugehoerigen Schlitz 63, 64 eingehaengt werden. Mit Hilfe der Muttern 55 werden die Haltestangen 53, 54 sodann mit den beiden Haltearmen 44 bzw. 45 verschraubt.

**Patentansprüche**

1. Verkehrsspiegel mit einem insbesondere sphaerisch gewoelbten Spiegelglas (1), einem Dekorrahmen (14) und einer Haltevorrichtung aus Metall,
   **gekennzeichnet** durch folgende Merkmale:
   a) das Spiegelglas (1) besteht aus thermisch vorgespanntem Einscheibensicherheitsglas;
   b) die metallische Reflexionsschicht (Silberschicht 18) ist auf der konkaven Oberflaeche des Spiegelglases (1) angeordnet und durch wenigstens eine Kunststoffschicht (20;21) gegen die atmosphaerischen Korrosionseinfluesse geschuetzt:
   c) der Dekorrahmen (14) ist unmittelbar auf der Oberflaeche des Spiegelglases (1) in Form einer auf dieser fest haftenden Schicht angeordnet, und
   d) die Halterung aus Metall umfasst wenigstens zwei Streben (4; 109,110), die an dem einen Ende mit Mitteln zur Befestigung am Rand des Spiegelglases (1) versehen sind, und an deren anderem Ende ueber ein Gelenk eine Rohrschelle (31,32; 107) zur Befestigung des Verkehrsspiegels an einem rohrfoermigen Pfosten (34; 106) angeordnet ist.

2. Verkehrsspiegel nach Anspruch 1, dadurch gekennzeichnet, dass der Dekorrahmen (14) auf der vorderen, konvexen Oberflaeche des Spiegelglases (1) angeordnet ist.

3. Verkehrsspiegel nach Anspruch 2, dadurch gekennzeichnet, dass der Dekorrahmen (14) aus einer emailartigen Einbrennfarbe besteht und im Zuge der Erwaermung der Glasscheibe fuer den Biege- und/oder den Vorspannprozess eingebrannt ist.

4. Verkehrsspiegel nach Anspruch 2 oder 3, dadurch gekennzeichnet, dass der Dekorrahmen (4) mehrfarbig ausgebildet ist.

5. Verkehrsspiegel nach einem oder mehreren der Ansprueche 1 bis 4, dadurch gekennzeichnet, dass der Dekorrahmen (14) wenigstens teilweise aus einer Farbe mit Reflexionseigenschaften besteht.

6. Verkehrsspiegel nach einem oder mehreren der Ansprueche 1 bis 5, dadurch gekennzeichnet, dass das Spiegelglas (1) entlang seinem Umfang mit einem rahmenartigen Schutzprofil (23) versehen ist.

7. Verkehrsspiegel nach einem oder mehreren der Ansprueche 1 bis 6, dadurch gekennzeichnet, dass das Spiegelglas (1) mit Bohrungen (2) fuer die Befestigung der metallischen Streben (4) unmittelbar an dem Spiegelglas (1) versehen ist.

8. Verkehrsspiegel nach Anspruch 7, dadurch gekennzeichnet, dass das Spiegelglas (1) im wesentlichen rechteckige Gestalt hat und mit vier jeweils in den Eckbereichen angeordneten Bohrungen (2) zur Befestigung von vier Streben (4) der Haltevorrichtung (3) versehen ist.

9. Verkehrsspiegel nach einem oder mehreren der Ansprueche 1 bis 8, dadurch gekennzeichnet, dass zur Verbindung der Haltevorrichtung (3) mit dem Spiegelglas (1) Kopfschrauben (8) dienen.

10. Verkehrsspiegel nach einem oder mehreren der Ansprueche 1 bis 9, dadurch gekennzeichnet, dass im Bereich der Bohrungen (2) zwischen der Glasoberflaeche und den zur Befestigung der Haltevorrichtung (3) dienenden Befestigungselementen (Schrauben 8) elastische Zwischenlagen (Huelse 9, Scheiben 10) zwischengeschaltet sind.

11. Verkehrsspiegel nach einem oder mehreren der Ansprueche 1 bis 6, dadurch gekennzeichnet, dass die Halterung aus Metall folgende Einzelteile umfasst:
  - ein zwei Streben (9,10) aufweisendes winkelfoermiges ebenes Halteblech (8), das im Bereich des Scheitels mit einer Bohrung (11) fuer die Befestigung an der Rohrschelle (107), und am Ende der beiden Streben (9,10) jeweils mit einer weiteren Aussparung (16,17; 27,28) versehen ist,
  - zwei in den Aussparungen (16,17; 27,28) der Haltearme (9,10) befestigte, senkrecht zur Ebene des Halteblechs (8) verlaufende Stangen (18,19) und
  - vier den Rand des Spiegelglases (1) uebergreifende Klammern (22), die ueber Bohrungen (25) jeweils auf den Stangen (18,19) angeordnet und mit diesen verspannbar sind.

12. Verkehrsspiegel nach Anspruch 11, dadurch gekennzeichnet, dass die Stangen (18,19) gerade, elastisch verformbare Metallstangen sind.

13. Verkehrsspiegel nach Anspruch 11 oder 12, dadurch gekennzeichnet, dass die Stangen (18,19) mit den Haltearmen (9,10) verschweisst sind.

14. Verkehrsspiegel nach Anspruch 11 oder 12, dadurch gekennzeichnet, dass die Stangen (18,19) aus Gewindestaeben bestehen und an den Haltearmen (9,10) mit Hilfe von Muttern (20) befestigt sind.

15. Verkehrsspiegel nach Anspruch 14, dadurch gekennzeichnet, dass die Aussparungen (16,17) in den Haltearmen (9,10) Bohrungen sind, in denen die Stangen (18,19) befestigt sind.

16. Verkehrsspiegel nach Anspruch 14, dadurch gekennzeichnet, dass die Aussparungen (27,28) in den Haltearmen (9,10) nach oben offene schlitzfoermige Langloecher sind, in die die Stangen (18,19) einhaengbar sind.

17. Verkehrsspiegel nach einem der Ansprueche 11 bis 16, dadurch gekennzeichnet, dass die Klammern (22) Spritzgussteile aus Kunststoff sind.

18. Verkehrsspiegel nach einem der Ansprueche 11 bis 17, dadurch gekennzeichnet, dass die Klammern (22) ueber eine Bohrung (25) im hinteren Schenkel (24) auf der Stange (18,19) angeordnet und auf dieser mit Hilfe wenigstens einer Mutter (26) befestigt sind.

19. Verkehrsspiegel nach einem oder mehreren der Ansprueche 1 bis 8, dadurch gekennzeichnet, dass die Klammern (27) eine Breitenabmessung (B) von etwa 2 bis 4 Zentimetern aufweisen.

20. Verkehrsspiegel nach einem der Ansprueche 1 bis 18, dadurch gekennzeichnet, dass die Metallteile aus verzinktem Stahl bestehen.

**Claims**

1. Traffic mirror with a mirror glass (1), which in particular is spherically arcuate, a decorative frame (14) and a retaining device of metal, characterised by the following features:
  a) the mirror glass (1) consists of thermally prestressed single pane safety glass,
  (b) the metallic reflective layer (silver layer 18) is arranged on the concave surface of the mirror glass (1) and protected against the atmospheric corrosive influences by at least one synthetic material layer (20; 21),

(c) the decorative frame (14) is arranged directly on the surface of the mirror glass (1) in the form of a layer firmly adhering on this and

d) the mount of metal comprises at least two stays (4; 109, 110), which are provided at the one end with means for fastening at the rim of the mirror glass (1) and at the other end of which a pipe saddle (31, 32; 107) is arranged, by way of a pivot, for fastening the traffic mirror at a tubular post (34; 106).

2. Traffic mirror according to claim 1, characterised thereby, that the decorative frame (14) is arranged on the convex front surface of the mirror glass (1).

3. Traffic mirror according to claim 2, characterised thereby, that the decorative frame (14) consists of an enamel-like stoving paint and is stoved in the course of the heating of the glass pane for the bending process and/or the prestressing process.

4. Traffic mirror according to claim 2 or 3, characterised thereby, that the decorative frame (14) is constructed in several colours.

5. Traffic mirror according to one or more of the claims 1 to 4, characterised thereby, that the decorative frame (14) consists at least partially of a paint with reflective properties.

6. Traffic mirror according to one or more of the claims 1 to 5, characterised thereby, that the mirror glass (1) is provided along its circumference with a framelike protective profile (23).

7. Traffic mirror according to one or more of the claims 1 to 6, characterised thereby, that the mirror glass (1) is provided with bores (2) for the fastening of the metallic stays (4) directly at the mirror glass (1).

8. Traffic mirror according to claim 7, characterised thereby, that the mirror glass (1) has substantially rectangular shape and is provided with four bores (2) respectively arranged in the corner regions for the fastening of four stays (4) of the retaining device (3).

9. Traffic mirror according to one or more of the claims 1 to 8, characterised thereby, that headed screws (8) serve for the connection of the retaining device (3) with the mirror glass (1).

10. Traffic mirror according to one or more of the claims 1 to 9 characterised thereby, that elastic intermediate layers (sleeve 9, washers 10) are interposed between the glass surface and the fastening elements (screws 8), which serve for the fastening of the retaining device (3), in the region of the bores (2).

11. Traffic mirror according to one or more of the claims 1 to 6, characterised thereby, that the mount of metal comprises the following individual parts:
- an angular planar metal retaining plate (8), which displays two stays (9, 10) and is provided in the region of the apex with a bore (11) for the fastening at the pipe saddle (107) and at the end of both the stays (9, 10) with a respective further recess (16, 17; 27, 28),
- two rods (18, 19) extending perpendicularly to the plane of the metal retaining plate (8) and fastened in the recesses (16, 17; 27, 28) of the retaining arms (9, 10) and
- four clips (22), which engage over the rim of the mirror glass (1), are respectively arranged over the rods (18, 19) by way of bores (25) and tightenable together with these rods.

12. Traffic mirror according to claim 11, characterised thereby, that the rods (18, 19) are elastically deformable straight metal rods.

13. Traffic mirror according to claim 11 or 12, characterised thereby, that the rods (18, 19) are welded together with the retaining arms (9, 10).

14. Traffic mirror according to claim 11 or 12, characterised thereby, that the rods (18, 19) consist of threaded rods and are fastened at the retaining arms (9, 10) with the aid of nuts (20).

15. Traffic mirror according to claim 14, characterised thereby, that the recesses (16, 17) in the retaining arms (9, 10) are bores, in which the rods (18, 19) are fastened.

16. Traffic mirror according to claim 14, characterised thereby, that the recesses (27, 28) in the retaining arms (9, 10) are upwardly open slot-shaped elongate holes, into which the rods (18, 19) are hookable.

17. Traffic mirror according to one of the claims 11 to 16, characterised thereby, that the clips (22) are injection-moulded parts of synthetic material.

**18.** Traffic mirror according to one of the claims 11 to 17, characterised thereby, that the clips (22) are arranged on the rod (18, 19) by way of a bore (25) in the rear limb (24) and fastened on the rod (18, 19) with the aid of at least one nut (26).

**19.** Traffic mirror according to one or more of the claims 1 to 8, characterised thereby, that the clips (27) display a width dimension (B) of about 2 to 4 centimetres.

**20.** Traffic mirror according to one of the claims 1 to 18, characterised thereby, that the metal parts consist of galvanised steel.

**Revendications**

**1.** Miroir de circulation comprenant une glace (1) bombée, en particulier de manière sphérique, un cadre décoratif (14) et un dispositif de support en métal,
caractérisé par les particularités suivantes :
a) la glace (1) est faite d'un verre de sécurité trempé par voie thermique;
b) la couche de réflexion métallique (couche d'argent 18) est appliquée sur la surface concave de la glace (1) et est protégée contre les influences de la corrosion atmosphérique par au moins une couche de matière plastique (20; 21);
c) le cadre décoratif (14) est appliqué directement sur la surface de la glace (1), sous la forme d'une couche adhérant solidement à celle-ci, et
d) le dispositif de support en métal comprend au moins deux bras (4; 109, 110) qui, à une extrémité, sont pourvus de moyens permettant une fixation au bord de la glace (1), tandis qu'à leur autre extrémité, ils sont pourvus, par l'intermédiaire d'une articulation, d'un collier d'attache (31, 32; 107) destiné à fixer le miroir de circulation à un poteau tubulaire (34; 106).

**2.** Miroir de circulation suivant la revendication 1, caractérisé en ce que le cadre décoratif (14) est disposé sur la face convexe antérieure de la glace (1).

**3.** Miroir de circulation suivant la revendication 2, caractérisé en ce que le cadre décoratif (14) est fait d'un vernis à cuire du type émail et est cuit au cours du chauffage de la feuille de verre pour le processus de bombage et/ou de trempe.

**4.** Miroir de circulation suivant la revendication 2 ou 3, caractérisé en ce que le cadre décoratif (14) est multicolore.

**5.** Miroir de circulation suivant l'une quelconque des revendications 1 à 4, caractérisé en ce que le cadre décoratif (14) est au moins pour partie constitué d'un vernis possédant des propriétés réfléchissantes.

**6.** Miroir de circulation suivant l'une quelconque des revendications 1 à 5, caractérisé en ce que la glace (1) est pourvue, le long de son pourtour, d'un profilé de protection en forme de cadre (23).

**7.** Miroir de circulation suivant l'une quelconque des revendications 1 à 6, caractérisé en ce que la glace (1) est pourvue de trous (2) pour la fixation directe des bras métalliques (4) sur la glace (1).

**8.** Miroir de circulation suivant la revendication 7, caractérisé en ce que la glace (1) est de forme essentiellement rectangulaire et est pourvue de quatre trous (2) dans ses zones de coin respectives en vue de la fixation de quatre bras (4) du dispositif de support (3).

**9.** Miroir de circulation suivant l'une quelconque des revendications 1 à 8, caractérisé en ce que des vis à tête (8) sont utilisées pour relier le dispositif de support (3) à la glace (1).

**10.** Miroir de circulation suivant l'une quelconque des revendications 1 à 9, caractérisé en ce que, dans la zone des trous (2), entre la surface de la glace et les éléments de fixation (vis 8) servant à la fixation du dispositif de support (3), sont intercalés des éléments intermédiaires (douille 9, rondelles 10).

**11.** Miroir de circulation suivant l'une quelconque des revendications 1 à 6, caractérisé en ce que le dispositif de support en métal comprend les pièces suivantes :
- une lame de support plane coudée (8) comportant deux bras (9, 10), qui est pourvue, dans la zone de son sommet, d'un trou (11) pour la fixation au collier de serrage (107) et, à l'extrémité des deux bras (9, 10), chaque fois d'une encoche supplémentaire (16, 17; 27; 28),
- deux tiges (18, 19) s'étendant perpendiculairement au plan de la lame de support (8) et fixées dans les encoches (16, 17; 27, 28) des bras de support (9, 10), et

- quatre crampons (22) chevauchant le bord de la glace (1), qui, par des alésages (25), sont chaque fois disposés sur les tiges (18, 19) et peuvent être serrés par celles-ci.

12. Miroir de circulation suivant la revendication 11, caractérisé en ce que les tiges (18, 19) sont des tiges métalliques droites élastiquement déformables.

13. Miroir de circulation suivant la revendication 11 ou 12, caractérisé en ce que les tiges (18, 19) sont soudées aux bras de support (9, 10).

14. Miroir de circulation suivant la revendication 11 ou 12, caractérisé en ce que les tiges (18, 19) sont des tiges filetées et sont fixées aux bras de support (9, 10) à l'aide d'écrous (20).

15. Miroir de circulation suivant la revendication 14, caractérisé en ce que les encoches (16, 17) dans les bras de support (9, 10) sont des trous dans lesquels les tiges (18, 19) sont fixées.

16. Miroir de circulation suivant la revendication 14, caractérisé en ce que les encoches (27, 28) dans les bras de support (9, 10) sont des boutonnières en forme de fentes ouvertes vers le haut dans lesquelles les tiges (18, 19) peuvent être accrochées.

17. Miroir de circulation suivant l'une quelconque des revendications 11 à 16, caractérisé en ce que les crampons (22) sont des pièces moulées sous pression en matière plastique.

18. Miroir de circulation suivant l'une quelconque des revendications 11 à 17, caractérisé en ce que les crampons (22) sont disposés sur les tiges (18, 19) par l'intermédiaire d'un alésage (25) dans leur aile postérieure (24) et sont fixés sur ces tiges à l'aide d'au moins un écrou (26).

19. Miroir de circulation suivant l'une quelconque des revendications 1 à 8, caractérisé en ce que les crampons (58) ont une dimension (B) en largeur d'environ 2 à 4 cm.

20. Miroir de circulation suivant l'une quelconque des revendications 1 à 18, caractérisé en ce que les pièces métalliques sont en acier zingué.

Fig. 1

Fig. 2

## Fig. 3

21
20
19
18
1
14
23

## Fig. 4

32
31
28
26
27
29
25
5
34
29
31
32
3
4
4

*Fig. 5*

Fig. 6

Fig. 7